# EUROPÄISCHE PATENTSCHRIFT

(11) **EP 3 292 346 B1**
(45) Veröffentlichungstag und Bekanntmachung des Hinweises auf die Patenterteilung: **12.02.2025**
(21) Anmeldenummer: 16724585.1
(22) Anmeldetag: 02.05.2016
(51) Int. Cl.: F21S 45/10, F21S 41/275, F21S 41/255, F21S 41/20

(54) **SCHEINWERFER FÜR KRAFTFAHRZEUGE**
HEADLIGHT FOR MOTOR VEHICLES
PHARE POUR VÉHICULES AUTOMOBILES

(30) Priorität: 06.05.2015 AT 503632015
(43) Veröffentlichungstag der Anmeldung: 14.03.2018
(73) Patentinhaber: ZKW Group GmbH, 3250 Wieselburg (AT)
(72) Erfinder: TAUDT, Lukas, 3250 Wieselburg (AT); KREMZER, Zbynek, 1130 Wien (AT); PÜRSTINGER, Josef, 3250 Wieselburg (AT)
(74) Vertreter: Patentanwaltskanzlei Matschnig & Forsthuber OG
(86) Internationale Anmeldenummer: PCT/AT2016/050120
(87) Internationale Veröffentlichungsnummer: WO 2016/176706

(56) Entgegenhaltungen:
- WO-A1-2014/027020
- WO-A1-2014/027020
- WO-A1-2015/031925
- WO-A1-2015/031925
- DE-A1- 19 803 986
- DE-A1- 19 803 986
- DE-U1- 29 912 504
- DE-U1- 29 912 504
- FR-A1- 2 770 617
- FR-A1- 2 770 617
- JP-A- 2014 063 604
- JP-A- 2014 063 604
- JP-A- H04 357 602
- JP-A- H04 357 602
- US-A1- 2015 103 544
- US-A1- 2015 103 544

## Beschreibung

Die Erfindung betrifft einen Kraftfahrzeugscheinwerfer gemäß dem Oberbegriff von Anspruch 1.

Weiters betrifft die Erfindung ein Kraftfahrzeug mit zumindest einem solchen, vorzugsweise mit zwei solchen Fahrzeugscheinwerfern.

In Kraftfahrzeugscheinwerfern werden Lichtabbildungssysteme verwendet, die Linsen enthalten. Diese Linsen bündeln von außen parallel einfallendes Sonnenlicht und lenken es zu Brennpunkten an einem Kraftfahrzeugscheinwerferelement. Abhängig vom Sonnenstand relativ zum Kraftfahrzeugscheinwerfer, von der Fahrzeugneigung oder von der Beschaffenheit des Kraftfahrzeugscheinwerferelementmaterials kann der Energieeintrag des Sonnenlichts, gemessen durch die Bestrahlungsstärke in W/m², am Kraftfahrzeugscheinwerferelement zu hoch sein und zum Aufschmelzen von Kraftfahrzeugscheinwerferelementen führen. Infolgedessen sind zumindest die Oberflächen der Kraftfahrzeugscheinwerferelemente beschädigt und unansehnlich, darüber hinaus können mechanische Instabilitäten der Kraftfahrzeugscheinwerferelemente und/oder Ausgasungen auftreten. In diesem Fall spricht man vom Brennglaseffekt.

Die Kraftfahrzeugscheinwerfer der oben genannten Art sind dem Stand der Technik bekannt. Darunter sind bereits einige Kraftfahrzeugscheinwerfer bekannt, die eine Lösung zur Minderung des Brennglaseffekts bieten. Zum Beispiel wird in DE 19803986 A1 die Verwendung optischer Ablenkmittel auf der Linsenaußenseite offenbart, die das Eindringen des Lichts ins Linseninnere im Wesentlichen vermeiden sollen. Diese optischen Ablenkmittel werden in vielen Fällen durch das Sand- bzw. Granitstrahlen der Linsenoberfläche erreicht und erfordern meistens ein zusätzliches Element, das das Einfallen vom durch die im Scheinwerfer angeordnete Lichtquelle erzeugten Licht auf die aufgeraute Linsenaußenfläche unterbindet. Diese Lösung verringert effektiv die numerische Apertur der Linse und kann die vom Kraftfahrzeugscheinwerfer erzeugten Lichtverteilungen beeinträchtigen.

Weiterhin ist das Aufbringen einer Oberflächenstruktur auf die Eintrittsseite einer Linse aus DE 29912504 U1 bekannt. Ähnlich wie bei der oben genannten Lösung wird diese Oberflächenstruktur dann zum Nachteil, wenn es um das Erzeugen von gesetzlich vorgeschriebenen Lichtverteilungen geht.

Außerdem legt JP 2014063604 A einen Kraftfahrzeugscheinwerfer offen, welcher eine eine lichtemittierende Fläche aufweisende Lichtquelle und eine asphärische Linse umfasst, wobei die Linse von der in dem Kraftfahrzeugscheinwerfer angeordneten Lichtquelle emittiertes Licht in Form einer Abblendlichtverteilung vor den Kraftfahrzeugscheinwerfer projiziert. Dabei weist die Linse einen Bereich 8 auf, der von dem von der Lichtquelle emittierten Licht nicht beleuchtet wird und auf den das Sonnenlicht einfällt. Dabei wird ausschließlich dieser Bereich zu Reduzierung des Brennglaseffekts durch diffuses Streuen des Sonnenlichts verwendet. Nachteilig bei diesem Ansatz, ist die Reduktion des brechenden Bereichs der Linse und kann nur bei Abblendlichtmodulen angewandt werden. Darüber hinaus hängt der mit dem Bereich erzielte Effekt erheblich vom Stand der Sonne ab.

Ein anderer Ansatz, bei dem das einschlägige Fahrzeugscheinwerferelement durch eine spezielle Metallschicht geschützt ist, ist aus DE 102012101434 A1 bekannt. Das Aufbringen einer zusätzlichen spiegelnden Metallschicht bzw. das Einsetzen eines entsprechenden zusätzlichen, z.B. hitzebeständigen, Scheinwerferelements in das Lichtabbildungssystem stellt oft aus Platzgründen ein technisch schwer zu lösendes Problem dar. Dabei können die folgenden Nachteile einzeln oder kombiniert zum Vorschein kommen: Erhöhte Kosten aufgrund zusätzlicher Arbeitsschritte und Scheinwerferelemente; Beeinträchtigung der mechanischen Integrität eines der Scheinwerferelemente, beispielsweise eines Linsenhalters; Fixierung des zusätzlichen Scheinwerferelements; Entstehung vom unerwünschten Streulicht im Kraftfahrzeugscheinwerfer; Veränderung des vom Kunden erwünschten Designs; Abhängigkeit der Bedampfungsmöglichkeit von der Geometrie des betroffenen Scheinwerferelements. Andere Kraftfahrzeugscheinwerfer sind aus der WO 2015/031925 A1 oder WO 2014/027020 A1 bekannt.

Die beschriebenen Nachteile des Stands der Technik sollen ausgeräumt werden. Es ist daher die Aufgabe dieser Erfindung, einen Scheinwerfer für Kraftfahrzeuge bereit zu stellen, bei dem einerseits der Energieeintrag in einen Brennpunkt auf eine größere Fläche einer Fahrzeugscheinwerferelement-Oberfläche verteilt und andererseits die von der in dem Fahrzeugscheinwerfer angeordneten Beleuchtungsvorrichtung erzeugte Lichtverteilung im Wesentlichen nicht verändert wird. Dadurch werden einerseits Brennglaseffekte reduziert, oder es können Materialien eingesetzt werden, welche thermisch geringer belastbar sind, und andererseits den gesetzlichen Vorschriften betreffend Lichtverteilungen Rechnung getragen.

Diese Aufgabe wird mit einem eingangs beschriebenen Kraftfahrzeugscheinwerfer mit den Merkmalen des Kennzeichens des Anspruchs 1 gelöst.

Bei einer der bevorzugten Ausführungsformen umfasst die Beleuchtungsvorrichtung, die im Kraftfahrzeugscheinwerfer angeordnet ist, eine, zwei oder mehr Lichtquellen, die das Licht zur Erzeugung der vorgegebenen Lichtverteilung abstrahlt/abstrahlen, wobei vorzugsweise der/den Lichtquelle/Lichtquellen ein Reflektor, insbesondere ein ellipsoider Freiformreflektor, und/oder eine Vorsatzoptik, vorzugsweise eine Abbildungslinsenanordnung, und/oder eine Blende zugeordnet ist.

Dabei ist es zweckdienlich, dass die Lichtquelle/die Lichtquellen als eine HID-Lampe, d.h., eine Xenon-Gasentladungslampe, beispielsweise nach Standard ECE-R99, und/oder eine, zwei oder mehrere LEDs, welche gleiche oder unterschiedliche Bauform aufweisen können, und/oder eine Glühlampe, beispielsweise eine Filament Lampe nach Standard ECE-R37, ausgebildet ist/sind.

Das von außen einfallende Licht kann man sich gedanklich als eine Mehrzahl von parallelen Lichtbündeln vorstellen. Beim Eintreffen auf einen Bereich einer herkömmlichen Linse werden viele dieser Lichtbündel zu einem Brennpunkt gebrochen. Dadurch entsteht ein Flächenbereich mit einer großen Bestrahlungsstärke. Durch die Präsenz einer erfindungsgemäßen optischen Struktur, die beispielsweise auf eine der Linsenoberflächen aufgetragen werden kann, wird jedes Lichtbündel auf einen anderen Brennpunkt gebrochen, defokussiert.

Dabei hat es sich als zweckmäßig erwiesen, die optischen Strukturelemente über zumindest eine, vorzugsweise genau eine definierte Grundstruktur zumindest eines, vorzugsweise genau eines des Lichtabbildungssystem-Elements zu verteilen.

Um den Herstellungsprozess derartiger optischen Strukturen zu erleichtern, ist es vorteilhaft, die Grundstruktur mit bestimmten geometrischen Eigenschaften zu verwenden.

Aus diesem Grund wird bei einer der bevorzugten Ausführungsformen dafür Sorge getragen, dass die Grundstruktur als ein zweidimensionales Gitter ausgebildet ist und aus einer, zwei oder mehreren definierten Gitterzellen besteht.

Weiters ist es zweckdienlich, dass das zweidimensionale Gitter im Wesentlichen ein strukturiertes Gitter mit regelmäßiger Zellgeometrie bildet.

Außerdem ist es denkbar, dass die Gitterzellen als regelmäßige Vielecke ausgebildet sind. Dabei ist bei einer besonders vorteilhaften Ausführungsform vorgesehen, dass auf jeder Gitterzelle zumindest eines, vorzugsweise genau eines, Strukturelement angeordnet ist.

Um die Beugung des einfallenden Lichts an der optischen Struktur und die nachfolgenden Interferenzeffekte nach der optischen Struktur zu vermeiden, sollen die geometrischen Maße der Gitterzellen und der Strukturelemente mit Bedacht ausgewählt werden.

In einer der bevorzugten Ausführungsformen ist es vorgesehen, dass die optischen Strukturelemente im Wesentlichen identisch ausgebildet sind.

Die Gestaltung der einzelnen Strukturelemente ist für die Reduzierung des Brennglaseffekts von großer Bedeutung.

Es ist erfindungsgemäß vorgesehen, dass die optischen Strukturelemente in ihrem Zentrum eine Zentralerhebung aufweisen.

Es ist erfindungsgemäß vorgesehen, dass die Höhe der Zentralerhebung 25 Mikrometer, beträgt.

Im Allgemeinen ist es erfindungsgemäß vorgesehen, dass die Zentralerhebung durch einen Funktionsgraphen einer stetigen auf einer Gitterzelle definierten reellen und nichtnegativen Funktion beschrieben ist. Dabei stellt der Funktionsgraph eine zweidimensionale Fläche dar.

Es kann darüber hinaus vorgesehen sein, dass die Funktion als eine stückweise lineare Funktion ausgebildet ist.

Ebenso ist es von Vorteil, dass die Funktion derart ausgebildet ist, dass der Funktionsgraph bezüglich einer vertikalen durch den Mittelpunkt der Gitterzelle verlaufenden Achse im Wesentlichen rotationssymmetrisch ist.

Bei einer besonders vorteilhaften Ausführungsform ist es vorgesehen, dass ein vertikaler Schnitt des Funktionsgraphen entlang einer horizontalen durch den Mittelpunkt der Gitterzelle verlaufenden Linie eine stückweise lineare Funktion aufweist, wobei diese Funktion zumindest fünf lineare Abschnitte aufweist und die Verlängerung des zweiten linearen Abschnitts und der dritte lineare Abschnitt einen Anstiegswinkel einschließen.

Darüber hinaus ist es erfindungsgemäß vorgesehen, dass die optischen Strukturelemente eine Grundfläche aufweisen, deren Ausdehnung 1.0 Millimeter, beträgt.

Um die Minderung des Brennglaseffekts nun näher zu erörtern müssen die gebrochenen modifizierten Lichtbündel betrachtet werden, und es ist erfindungsgemäß vorgesehen, dass das erste modifizierte Lichtbündel auf ein erstes Scheinwerfer-Element einfällt und einen ersten modifizierten Leuchtpunkt ausleuchtet und das zweite modifizierte Lichtbündel auf ein zweites Scheinwerfer-Element einfällt und einen zweiten modifizierten Leuchtpunkt ausleuchtet. Dabei ist es besonders vorteilhaft, dass die Größe des ersten modifizierten Leuchtpunktes und/oder des zweiten modifizierten Leuchtpunktes, beispielsweise ein Durchmesser des Leuchtpunktes, mit den Abmessungen der Zentralerhebung, beispielsweise mit einem ersten Anstiegswinkel und oder mit einem zweiten Anstiegswinkel, einem Plateau-Durchmesser und/oder einer Höhe der Zentralerhebung in Zusammenhang steht.

Es ist erfindungsgemäß vorgesehen, dass die Größe, beispielswese ein Durchmesser, des ersten modifizierten Leuchtpunktes und/oder des zweiten modifizierten Leuchtpunktes größer ist als die Größe, beispielsweise ein Durchmesser, eines unmodifizierten Leuchtpunktes.

Dabei ist es erfindungsgemäß vorgesehen, dass die maximale Bestrahlungsstärke innerhalb des ersten modifizierten Leuchtpunktes und / oder innerhalb des zweiten modifizierten Leuchtpunktes geringer als die Bestrahlungsstärke innerhalb des unmodifizierten Leuchtpunktes ist.

Es muss hier angemerkt sein, dass die optische Struktur an vielen Stellen im Kraftfahrzeugscheinwerfer angebracht werden kann. Die genaue Position der optischen Struktur hängt von der konkreten Gestaltung des Fahrzeugscheinwerfers ab. Außer der gesetzlichen Vorschriften muss bei der Positionierung der optischen Struktur noch eine Forderung erfüllt sein. Die Struktur muss vom von außen einfallenden Licht (bei Sonnenlicht unabhängig von der Sonnenhöhe) durchgestrahlt werden.

Es hat sich als zweckdienlich erwiesen, die optische Struktur auf zumindest einer, vorzugsweise genau einer Oberfläche eines Lichtabbildungssystem-Elements anzuordnen, welches in Form einer Projektionslinse und/oder Abbildungslinse ausgebildet ist.

Dabei ist es erfindungsgemäß vorgesehen, dass die optische Struktur auf einer Eintrittsfläche und/oder einer Austrittsfläche eines Lichtabbildungssystem-Elements angeordnet ist, welches in Form einer Projektionslinse und/oder Abbildungslinse ausgebildet ist.

Die vorliegende Erfindung ist nachfolgend anhand bevorzugter nicht einschränkender Ausführungsbeispiele unter Bezugnahme auf die Zeichnung noch eingehend veranschaulicht. Es zeigt:
Fig. 1 eine schematische Darstellung des inneren und des äußeren Brennglaseffektes in einem Fahrzeugscheinwerfer nach dem Stand der Technik,
Fig. 2 eine schematische Darstellung des inneren und des äußeren Brennglaseffektes in einem Fahrzeugscheinwerfer mit einer erfindungsgemäßen optischen Struktur,
Fig. 3 einen unmodifizierten sowohl einen modifizierten Leuchtpunkt auf einem Scheinwerfer-Element erzeugt in einem Fahrzeugscheinwerfer jeweils ohne und mit einer erfindungsgemäßen optischen Struktur,
Fig. 4 eine Linse mit einer optischen Struktur in einer dreidimensionalen Ansicht, einen Ausschnitt aus der Linse in vergrößerter Darstellung, und weiters ein noch vergrößerten Ausschnitt aus dem bereits vergrößerten Ausschnitt,
Fig. 5 eine Leuchtpunktaufweitung durch ein einzelnes erfindungsgemäßes Strukturelement beim parallel einfallenden Licht,
Fig. 6 eine Draufsicht auf eine über eine hexagonale Grundstruktur verteilte optische Struktur, die aus Strukturelementen mit runden Zentralerhebungen besteht,
Fig. 7 eine perspektivische Sicht eines Ausschnitts einer optischen Struktur, und
Fig. 8 einen Seitenschnitt eines rotationsymmetrischen Strukturelementes, welcher Schnitt als Funktionsgraph einer stückweiselinearen eindimensionalen reellen Funktion ausgebildet ist.

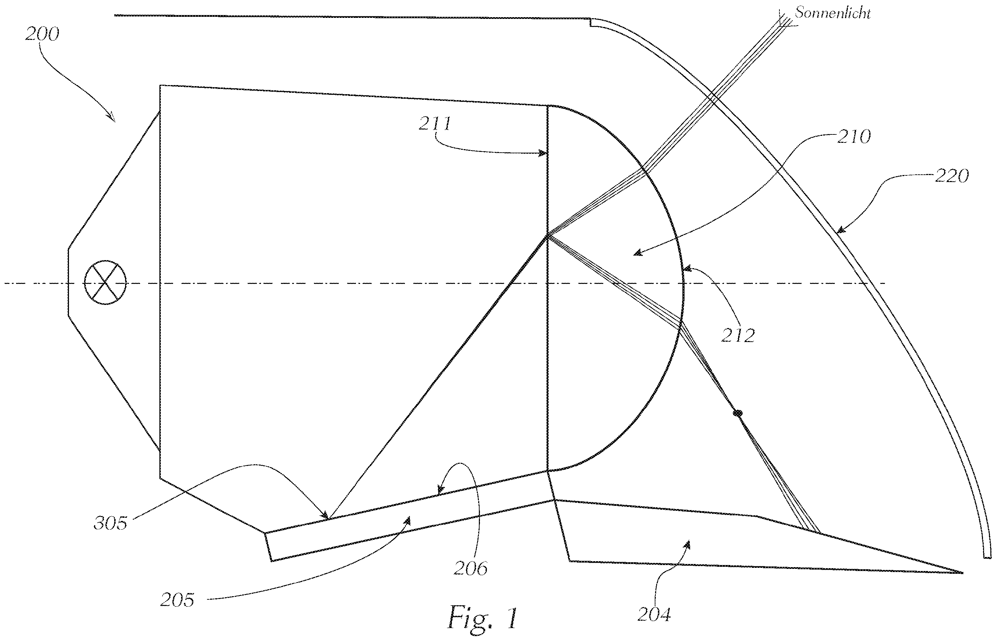

Zunächst wird der Bezug auf die Fig. 1 genommen, die schematisch einen herkömmlichen Fahrzeugscheinwerfer mit dessen wichtigsten Elementen in Seitenschnitt darstellt. Darin sind eine Beleuchtungsvorrichtung 200, ein erstes Kraftfahrzeugscheinwerferelement, z.B. eine Blende, ein Halter oder ein Designelement 204, welches beispielsweise als eine Funktionseinheiten im Scheinwerfer trennende Blende ausgebildet sein kann, ein zweites Kraftfahrzeugscheinwerferelement, z.B. ein Linsenhalter, ein Primäroptikhalter, eine Platine, beispielsweise eine Leiterplatte / ein Schaltungsträger 205 in Form eines PCB (Printed Circuit Board), auf dem beispielsweise LEDs bestückt werden, ein Lichtabbildungssystem, welches hier der Einfachheit halber in Form einer typischen Abbildungslinse 210 dargestellt ist, und eine Abschlussscheibe 220 gezeigt.

Das von außen einfallende Lichtbündel, "Sonnenlicht", wird beim Eindringen in den Kraftfahrzeugscheinwerfer mehrmals gebrochen und reflektiert. Von besonderem Interesse sind die Lichtstrahlen, die nach mehrmaliger Brechung und/oder Reflexion auf oft aus Kunststoff bestehende Kraftfahrzeugscheinwerferelemente, wie z.B. verschiedene Halter, Designs oder Platinen 204, 205, treffen. Diese entstehen meistens durch die Brechung und/oder Reflexion an der Eintrittsfläche 211 eines Optik-Elements, beispielsweise einer Abbildungs- oder Projektionslinse. Der durchtretende Strahl fällt dann direkt auf ein Kraftfahrzeugscheinwerferelement (innerer Brennglaseffekt), beispielsweise auf einen Kunststoffhalter, wobei das reflektierte Bündel erst nach einer weiteren Brechung an der Austrittsfläche eines Optik-Elements, z.B. einer Abbildungs- oder Projektionslinse 212 auf ein Kraftfahrzeugscheinwerferelement trifft (äußerer Brennglaseffekt).

Bei einer starken Fokussierung von dem gebrochenen und/oder reflektierten Lichtbündel kommt es zu einer hohen Bestrahlungsstärke in einem Leuchtpunkt 305 auf der Oberfläche 205 des Kraftfahrzeugscheinwerferelements, die die Schädigungsgrenze des Materials weit übertreffen kann. Beispielsweise kann die Bestrahlungsstärke einen Wert von 75000 W/m² erreichen, welche die Schädigungsgrenze eines speziellen in Kraftfahrzeugscheinwerfern eingesetzten Kunststoffmaterials "PBT-GF30 schwarz" von ca. 62000 W/m² übersteigt und rasches Schmelzen des Kraftfahrzeugscheinwerferelements verursacht.

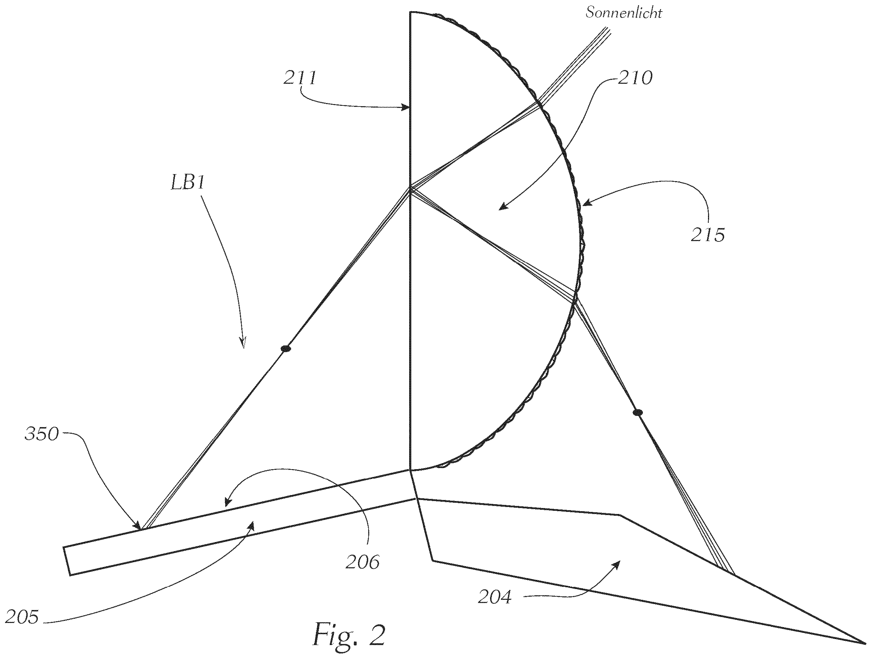

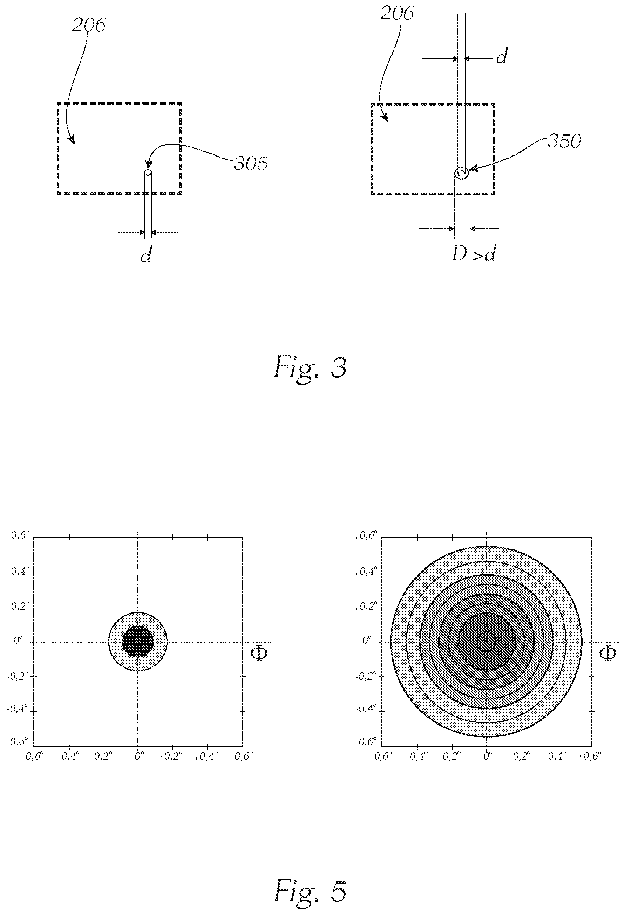

Um die Bestrahlungsstärke zu reduzieren wird eine optische Struktur verwendet, die das gebrochene und/ oder reflektierte Lichtbündel defokussiert. Fig. 2 zeigt eine Abbildungslinse 210 mit einer optischen Struktur 215, die auf der Austrittsfläche der Linse aufgetragen ist. Durch die spezielle Form der Strukturelemente 502 wird die Brennpunktlage im Raum verschoben. Dadurch entsteht auf dem einem der Kraftfahrzeugscheinwerferelemente 204, 205 ein anderer größerer Leuchtpunkt 350, wie schematisch in Fig. 3 dargestellt ist. Obwohl keiner von den beiden Leuchtpunkten einen exakten ausbilden, ist es durchaus denkbar die Größe beider Leuchtpunkte durch ihren Durchmesser d bzw. D qualitativ darzustellen. Je größer der Durchmesser eines Leuchtpunktes ist umso kleiner ist der maximale Wert der Bestrahlungsstärke.

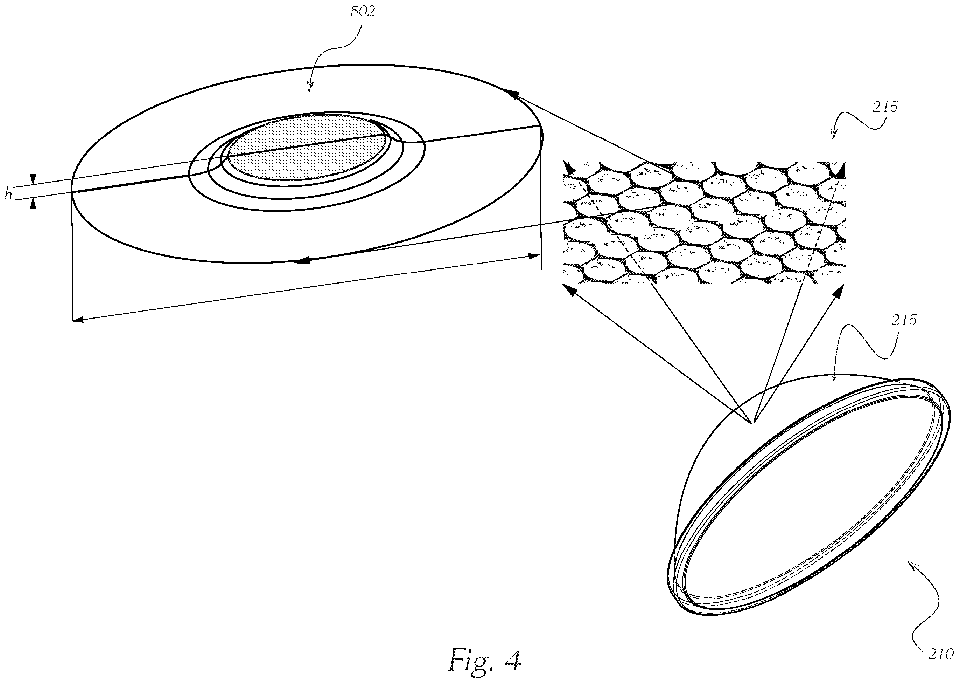

Fig. 4 zeigt eine perspektivische Sicht eines vergrößerten Ausschnitts einer auf der Austrittsfläche 215 einer Linse angeordneten optischen Struktur, welche auf einer hexagonalen Grundstruktur aufgetragen ist, und einen noch größeren Ausschnitt mit einem Strukturelement 502. Dabei weist das Strukturelement eine zentrale Erhebung in Form eines Kegelstumpfs einer bestimmten Höhe h.

Eine "Verschmierung" des Punktes durch die kegelstumpfförmige Zentralerhebung des Strukturelements 502 ist in Fig. 5 gezeigt. Dabei zeigt das linke Bild ein Streubild eines Strukturelements 502 ohne zentrale Erhebung (h=0). Die beleuchtete Fläche ist ein Punkt mit einem Durchmesser. Der Strahlungsfluss pro Flächeneinheit (Strahlungsflussdichte) ist groß. Durch die zentrale Erhebung kommt zu Ausweitung der beleuchteten Fläche (rechtes Bild in Fig. 5). Dadurch wird die Strahlungsflussdichte reduziert. Die gesamte einfallende Strahlungsenergie wird hierbei auf eine größere Fläche umverteilt, mit anderen Worten kommt es zu einer "Defokussierung" des ursprünglichen Lichtbündels, sodass defokussierte Lichtbündel LB1 entstehen.

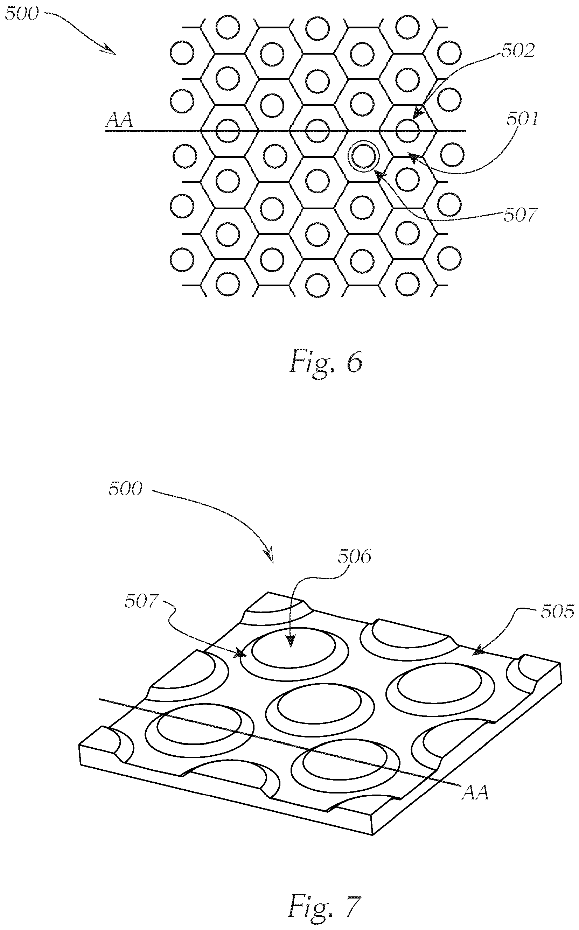

In Fig. 6 ist ein Ausführungsbeispiel einer optischen Struktur in Draufsicht gezeigt. Dabei besteht die Grundstruktur 500 aus hexagonalen Gitterzellen 501. Die Strukturelemente weisen dabei eine rotationssymmetrische Zentralerhebung. In Fig. 7 ist zu sehen, dass diese Zentralerhebung als ein gerader Kegelstumpf mit einer Deckfläche 506 und einer Mantelfläche 507 ausgebildet ist und auf einer Grundfläche 505 angeordnet ist. Bei senkrecht zu der Grundfläche 505 einfallenden Licht wird es an den Mantelflächen gebrochen und führt zu der Verschmierung des Leuchtpunktes auf einem Kraftfahrzeugscheinwerferelement.

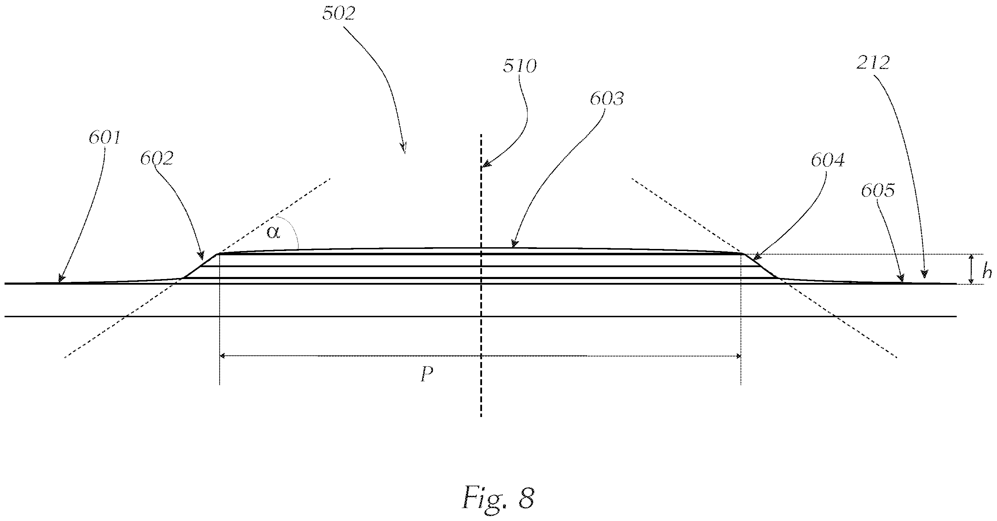

Der Grad der Verschmierung hängt mit den geometrischen Eigenschaften der Zentralerhebung des optischen Strukturelements 502 zusammen. Für das oben genannte Beispiel einer kegelstumpfförmigen Zentralerhebung sind diese Eigenschaften in Fig. 8 zusammengefasst. Die Fig. 8 zeigt einen vertikalen Schnitt des Strukturelements 502 entlang einer horizontalen durch den Mittelpunkt 510 der Gitterzelle 501 verlaufenden Linie AA (Fig. 6 und 7). Dabei kann der Schnitt durch den Mittelpunkt 510 des Strukturelements 502 durch einen Graphen einer stückweiselinearen Funktion beschrieben werden. In Fig. 8 weist die Funktion fünf lineare Abschnitte 601, 602, 603, 604, 605 auf. Die Verschmierung des Leuchtpunktes hängt von der Länge P des mittleren linearen Abschnitts 603, die dem Durchmesser der Deckfläche 506 gleich ist, von der Länge des zweiten Abschnitts 602 sowie des vierten Abschnitts 604 und dem Anstiegswinkel α des zweiten linearen Abschnitts 602.

Die Erfindung wurde anhand einer hexagonalen Grundstruktur und einer im Wesentlich flachen rotationssymmetrischen Zentralerhebung beschrieben, für welche die Erfindung besonders vorteilhaft ist.

Prinzipiell ist die Erfindung aber auch mit nicht hexagonalen Grundstrukturen und mit anders ausgebildeten Zentralerhebungen einsetzbar.

## Patentansprüche

1. Kraftfahrzeugscheinwerfer, welcher umfasst:
eine zumindest teilweise, insbesondere im sichtbaren Spektralbereich, transparente Abdeckscheibe (220),
zumindest eine Beleuchtungsvorrichtung (200),
zumindest ein der Beleuchtungsvorrichtung (200) zugeordnetes Lichtabbildungssystem (210), das von zumindest einer Lichtquelle emittiertes Licht in einen Bereich vor die Beleuchtungsvorrichtung in Form einer vorgegebenen Lichtverteilung abbildet, wobei
zumindest eine optische Struktur (215) im Kraftfahrzeugscheinwerfer vorgesehen ist, welche optische Struktur (215) aus einem, zwei oder mehreren optischen Strukturelementen (502) besteht und in dem Kraftfahrzeugscheinwerfer derart angeordnet ist, dass zumindest ein Teil des von außen auf den Kraftfahrzeugscheinwerfer parallel einfallenden Lichts, insbesondere Sonnenlichts, auf die optische Struktur (215) einfällt und bei einem Durchtritt durch die optische Struktur und bei einer Reflexion von der optischen Struktur gestreut wird,
wobei die Strukturelemente (502) eine lichtstreuende Wirkung aufweisen, und derart ausgebildet sind, dass jedes Strukturelement (502) ein durch das Strukturelement durchtretendes Lichtbündel zu einem ersten modifizierten Lichtbündel (LB1) modifiziert und ein vom Strukturelement (502) reflektiertes Lichtbündel zu einem zweiten modifizierten Lichtbündel (LB2) modifiziert, wobei die vorgegebene Lichtverteilung durch die optische Struktur (215) im Wesentlichen unverändert bleibt,
**wobei**
das erste modifizierte Lichtbündel auf ein erstes Scheinwerfer-Element (205) einfällt und einen ersten modifizierten Leuchtpunkt (350) ausleuchtet und das zweite modifizierte Lichtbündel auf ein zweites Scheinwerfer-Element (204) einfällt und einen zweiten modifizierten Leuchtpunkt ausleuchtet, und wobei
eine Größe, beispielsweise ein Durchmesser (D), des ersten modifizierten Leuchtpunktes (350) und des zweiten modifizierten Leuchtpunktes größer ist als eine Größe, beispielswese ein Durchmesser (d), eines unmodifizierten Leuchtpunktes (305), wobei die maximale Bestrahlungsstärke innerhalb des ersten modifizierten Leuchtpunktes (350) und innerhalb des zweiten modifizierten Leuchtpunktes (450) geringer als die Bestrahlungsstärke innerhalb des unmodifizierten Leuchtpunktes (305) ist,
und wobei
die optische Struktur (215) auf einer Eintrittsfläche (211) und/oder einer Austrittsfläche (212) eines Lichtabbildungssystem-Elements angeordnet ist, welches in Form einer Projektionslinse und/oder Abbildungslinse (210) ausgebildet ist, und wobei
die optischen Strukturelemente (502) eine Grundfläche aufweisen, und
die optischen Strukturelemente (502) in ihrem Zentrum eine Zentralerhebung (506) aufweisen, und wobei die Zentralerhebung (506) durch einen Funktionsgraphen einer stetigen auf einer Gitterzelle (501) definierten reellen und nichtnegativen Funktion beschrieben ist, **dadurch gekennzeichnet, dass**
die Ausdehnung der Grundfläche 1.0 Millimeter beträgt und die Zentralerhebung eine Höhe (h) von 25 Mikrometer aufweist. Z

2. Kraftfahrzeugscheinwerfer nach Anspruch 1, wobei die Beleuchtungsvorrichtung (200) eine, zwei oder mehr Lichtquellen umfasst, wobei vorzugsweise der zumindest einen Lichtquelle ein Reflektor, insbesondere ein ellipsoider Freiformreflektor, und/oder eine Vorsatzoptik, vorzugsweise eine Abbildungslinsenanordnung, und/oder eine Blende zugeordnet ist.

3. Kraftfahrzeugscheinwerfer nach Anspruch 1 oder 2, wobei die zumindest eine Lichtquelle als eine HID-Lampe, vorzugsweise eine HID-Lampe nach Standard ECE-R99, und/oder eine, zwei oder mehrere LEDs und/oder eine Glühlampe, beispielsweise eine Filament Lampe nach ECE-R37, ausgebildet ist.

4. Kraftfahrzeugscheinwerfer nach einem der Ansprüche 1 bis 3, wobei die optischen Strukturelemente (502) über zumindest eine, vorzugsweise genau eine definierte Grundstruktur (500) zumindest eines, vorzugsweise genau eines Lichtabbildungssystem-Elements verteilt sind, wobei die Grundstruktur (500) beispielsweise als ein zweidimensionales Gitter (503) ausgebildet ist und aus einer, zwei oder mehreren definierten Gitterzellen (501) besteht, wobei das zweidimensionale Gitter (503) vorzugsweise im Wesentlichen ein strukturiertes Gitter mit regelmäßiger Zellgeometrie bildet und/oder die Gitterzellen (501) beispielsweise als regelmäßige Vielecke ausgebildet sind, wobei vorzugsweise auf jeder Gitterzelle (501) zumindest ein, insbesondere genau ein, Strukturelement (502) angeordnet ist.

5. Kraftfahrzeugscheinwerfer nach einem der Ansprüche 1 bis 4, wobei die optischen Strukturelemente (502) im Wesentlichen identisch ausgebildet sind.

6. Kraftfahrzeugscheinwerfer nach einem der Ansprüche 1 bis 5, **wobei** die Größe des ersten modifizierten Leuchtpunktes (350) und/oder des zweiten modifizierten Leuchtpunktes, beispielsweise ein Durchmesser des Leuchtpunktes, mit den Abmessungen der Zentralerhebung, beispielsweise mit einem ersten Anstiegswinkel (α) und/oder mit einem zweiten Anstiegswinkel, einem Plateau-Durchmesser (P) und/oder einer Höhe der Zentralerhebung (h) in Zusammenhang steht.

7. Kraftfahrzeugscheinwerfer nach einem der Ansprüche 1 bis 6, **wobei** die reelle und nichtnegative Funktion derart ausgebildet ist, dass der Funktionsgraph bezüglich einer vertikalen durch einen Mittelpunkt (510) der Gitterzelle (501) verlaufenden Achse im Wesentlichen rotationssymmetrisch ist, und wobei ein vertikaler Schnitt des Funktionsgraphen entlang einer horizontalen durch den Mittel-punkt (510) der Gitterzelle (501) verlaufenden Linie (AA) eine stückweise lineare Funktion aufweist, wobei diese Funktion zumindest fünf lineare Abschnitte (601, 602, 603, 604, 605) aufweist und die Verlängerung des zweiten linearen Abschnitts (602) und der dritte lineare Abschnitt (603) einen Anstiegswinkel (α) einschließen.

8. Kraftfahrzeug mit zumindest einem, vorzugsweise zwei Kraftfahrzeugscheinwerfern nach einem der Ansprüche 1 bis 7.

## Claims

1. Motor vehicle headlamp, which comprises
an at least partially transparent cover lens (220), in particular in the visible spectral range,
at least one lighting device (200),
at least one light imaging system (210) associated with the lighting device (200), which images light emitted by at least one light source into an area in front of the lighting device in the form of a predetermined light distribution, wherein
at least one optical structure (215) is provided in the motor vehicle headlamp, which optical structure (215) comprises one, two or more optical structural elements (502) and is arranged in the motor vehicle headlamp in such a way that at least some of the light, in particular sunlight, incident on the motor vehicle headlamp from outside in parallel is incident on the optical structure (215) and is scattered by the optical structure when it passes through the optical structure and when it is reflected,
wherein the structural elements (502) have a light-scattering effect and are designed such that each structural element (502) modifies a light beam passing through the structural element to form a first modified light beam (LB1) and modifies a light beam reflected by the structural element (502) to form a second modified light beam (LB2), the predetermined light distribution by the optical structure (215) remaining essentially unchanged,
wherein
the first modified light beam is incident on a first headlamp element (205) and illuminates a first modified light spot (350) and the second modified light beam is incident on a second headlamp element (204) and illuminates a second modified light spot, and wherein
a size, for example a diameter (D), of the first modified light spot (350) and of the second modified light spot is greater than a size, for example a diameter (d), of an unmodified light spot (305), the maximum irradiance within the first modified light spot (350) and within the second modified light spot (450) being less than the irradiance within the unmodified light spot (305),
and wherein
the optical structure (215) is arranged on an entrance surface (211) and/or an exit surface (212) of a light imaging system element which is designed in the form of a projection lens and/or imaging lens (210), and wherein
the optical structural elements (502) have a base surface, and
the optical structural elements (502) have a central elevation (506) in their center, and wherein
the central elevation (506) is described by a function graph of a continuous real and non-negative function defined on a grid cell (501), **characterized in that** the extension of the base area is 1.0 millimetre and the central elevation has a height (h) of 25 micrometres.

2. Motor vehicle headlamp according to claim 1, wherein the lighting device (200) comprises one, two or more light sources, wherein preferably a reflector, in particular an ellipsoidal free-form reflector, and/or an optical attachment, preferably an imaging lens arrangement, and/or a diaphragm is associated with the at least one light source.

3. Motor vehicle headlamp according to claim 1 or 2, wherein the at least one light source is designed as an HID lamp, preferably an HID lamp according to standard ECE-R99, and/or one, two or more LEDs and/or an incandescent lamp, for example a filament lamp according to ECE-R37.

4. Motor vehicle headlamp according to one of claims 1 to 3, wherein the optical structural elements (502) are distributed over at least one, preferably exactly one, defined basic structure (500) of at least one, preferably exactly one, light imaging system element, wherein the basic structure (500) is designed, for example, as a two-dimensional grid (503) and consists of one, two or more defined grid cells (501), wherein the two-dimensional grid (503) preferably essentially forms a structured grid with regular cell geometry and/or the grid cells (501) are formed, for example, as regular polygons, wherein at least one, in particular exactly one, structural element (502) is preferably arranged on each grid cell (501).

5. Motor vehicle headlamp according to one of claims 1 to 4, wherein the optical structural elements (502) are essentially identical.

6. Motor vehicle headlamp according to one of claims 1 to 5, wherein the size of the first modified light spot (350) and/or the second modified light spot, for example a diameter of the light spot, is related to the dimensions of the central elevation, for example to a first angle of rise (α) and/or to a second angle of rise, a plateau diameter (P) and/or a height of the central elevation (h).

7. Motor vehicle headlamp according to any one of claims 1 to 6, wherein the real and non-negative function is formed such that the function graph is substantially rotationally symmetric with respect to a vertical axis passing through a center point (510) of the grid cell (501),and whereina vertical section of the function graph along a horizontal line (AA) running through the center point (510) of the grid cell (501) has a piecewise linear function, wherein this function has at least five linear sections (601, 602, 603, 604, 605) and the extension of the second linear section (602) and the third linear section (603) include an angle of approach (α).

8. Motor vehicle with at least one, preferably two motor vehicle headlights according to any one of claims 1 to 7.

## Revendications

1. Motor vehicle headlamp, which comprises
an at least partially transparent cover lens (220), in particular in the visible spectral range,
at least one lighting device (200),
at least one light imaging system (210) associated with the lighting device (200), which images light emitted by at least one light source into an area in front of the lighting device in the form of a predetermined light distribution, wherein
at least one optical structure (215) is provided in the motor vehicle headlamp, which optical structure (215) comprises one, two or more optical structural elements (502) and is arranged in the motor vehicle headlamp in such a way that at least some of the light, in particular sunlight, incident on the motor vehicle headlamp from outside in parallel is incident on the optical structure (215) and is scattered by the optical structure when it passes through the optical structure and when it is reflected,
wherein the structural elements (502) have a light-scattering effect and are designed such that each structural element (502) modifies a light beam passing through the structural element to form a first modified light beam (LB1) and modifies a light beam reflected by the structural element (502) to form a second modified light beam (LB2), the predetermined light distribution by the optical structure (215) remaining essentially unchanged,
où
le premier faisceau lumineux modifié est incident sur un premier élément de projecteur (205) et éclaire un premier point lumineux modifié (350) et le deuxième faisceau lumineux modifié est incident sur un deuxième élément de projecteur (204) et éclaire un deuxième point lumineux modifié, et dans lequel
une taille, par exemple un diamètre (D), du premier point lumineux modifié (350) et du second point lumineux modifié est plus grande qu'une taille, par exemple un diamètre (d), d'un point lumineux non modifié (305), l'éclairement lumineux maximal à l'intérieur du premier point lumineux modifié (350) et à l'intérieur du second point lumineux modifié (450) étant inférieur à l'éclairement lumineux à l'intérieur du point lumineux non modifié (305),
et dans lequel
la structure optique (215) est disposée sur une surface d'entrée (211) et/ou une surface de sortie (212) d'un élément de système d'imagerie lumineuse qui est réalisé sous la forme d'une lentille de projection et/ou d'une lentille d'imagerie (210), et dans lequel
les éléments de structure optique (502) présentent une surface de base, et
les éléments de structure optique (502) présentent en leur centre une bosse centrale (506), et dans lequel
l'élévation centrale (506) est décrite par un graphique fonctionnel d'une fonction réelle et non négative continue définie sur une cellule de grille (501), **caractérisé en ce que** l'extension de la surface de base est de 1,0 millimètre et l'élévation centrale présente une hauteur (h) de 25 micromètres.

2. Projecteur de véhicule automobile selon la revendication 1, dans lequel le dispositif d'éclairage (200) comprend une, deux ou plusieurs sources lumineuses, un réflecteur, en particulier un réflecteur ellipsoïdal de forme libre, et/ou une optique rapportée, de préférence un agencement de lentilles d'imagerie, et/ou un diaphragme étant de préférence associé à ladite au moins une source lumineuse.

3. Projecteur de véhicule automobile selon la revendication 1 ou 2, dans lequel l'au moins une source lumineuse est conçue comme une lampe HID, de préférence une lampe HID selon la norme ECE-R99, et/ou une, deux ou plusieurs LED et/ou une lampe à incandescence, par exemple une lampe à filament selon la norme ECE-R37.

4. Projecteur de véhicule automobile selon l'une des revendications 1 à 3, dans lequel les éléments de structure optique (502) sont répartis sur au moins une structure de base (500), de préférence exactement définie, d'au moins un élément de système d'imagerie lumineuse, de préférence exactement un élément de système d'imagerie lumineuse, la structure de base (500) étant par exemple réalisée sous la forme d'un réseau bidimensionnel (503) et étant constituée d'une, deux ou plusieurs cellules de grille (501) définies, la grille bidimensionnelle (503) formant de préférence essentiellement une grille structurée avec une géométrie de cellule régulière et/ou les cellules de grille (501) étant par exemple réalisées sous forme de polygones réguliers, au moins un élément de structure (502), en particulier exactement un, étant de préférence disposé sur chaque cellule de grille (501).

5. Projecteur de véhicule automobile selon l'une quelconque des revendications 1 à 4, dans lequel les éléments de structure optique (502) sont réalisés de manière sensiblement identique.

6. Projecteur de véhicule automobile selon l'une des revendications 1 à 5, dans lequel la taille du premier point lumineux modifié (350) et/ou du deuxième point lumineux modifié, par exemple un diamètre du point lumineux, est liée aux dimensions du relief central, par exemple à un premier angle de montée (α) et/ou à un deuxième angle de montée, un diamètre de plateau (P) et/ou une hauteur du relief central (h).

7. Projecteur de véhicule automobile selon l'une quelconque des revendications 1 à 6, dans lequel la fonction réelle et non négative est telle que le graphe de la fonction est sensiblement à symétrie de révolution par rapport à un axe vertical passant par un centre (510) de la cellule de grille (501), et oùune coupe verticale du graphe fonctionnel le long d'une ligne horizontale (AA) passant par le point central (510) de la cellule de grille (501) présente une fonction linéaire par morceaux, cette fonction présentant au moins cinq sections linéaires (601, 602, 603, 604, 605) et le prolongement de la deuxième section linéaire (602) et la troisième section linéaire (603) comprenant un angle de montée (α).

8. Véhicule automobile comportant au moins un, de préférence deux, projecteur(s) de véhicule automobile selon l'une quelconque des revendications 1 à 7.
